**Europäisches Patentamt**

**European Patent Office**

**Office européen des brevets**

(11) Veröffentlichungsnummer: **0 318 817**
**A2**

(12) # EUROPÄISCHE PATENTANMELDUNG

(21) Anmeldenummer: **88119511.9**

(22) Anmeldetag: **23.11.88**

(51) Int. Cl.4: **F16F 9/06 , B60G 15/12**

(30) Priorität: **28.11.87 DE 3740404**

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **Hermann Hemscheidt**
**Maschinenfabrik GmbH & Co.**
**Bornberg 97-103**
**D-5600 Wuppertal 1(DE)**

(72) Erfinder: **Hummel, Kurt M.**
**Röttgen 79**
**D-5600 Wuppertal 1(DE)**

(54) **Hydro-pneumatischer Stoss- und Schwingungsdämpfer mit Innenrohr.**

(57) Hydro-pneumatischer Stoß- und Schwingungsdämpfer, bestehend aus einem Zylinder (1), einem
innerhalb des Zylinders (1) axialbeweglich angeordneten und zwei mit einem hydraulischen Dämpfungsmedium gefüllte, über mindestens eine Drosselung verbundene Arbeitsräume (9, 10) abteilenden
Dämpfungskolben (2), einer mit dem Dämpfungskolben mechanisch verbundenen, abgedichtet aus dem
Zylinder (1) nach außen geführten Kolbenstange (3),
einem mit einem (9) der Arbeitsräume (9, 10) verbundenen Ausgleichsraum (11) zur Aufnahme eines
von der Kolbenstange (3) verdrängten Volumens des
Dämpfungsmediums sowie einer über einen freibeweglichen, schwimmenden Trennkolben (12) dicht
von dem Ausgleichsraum (11) getrennten, mit einem
kompressiblen Medium gefüllten Gasfederkammer
(13). Die Kolbenstange (3) ist hohlzylindrisch und der
Dämpfungskolben (2) ringförmig ausgebildet. Innerhalb des Zylinders (1) ist koaxial zu diesem ein sich
mit geringem Umfangsspiel durch den ringförmigen
Dämpfungskolben (2) hindurch und in die hohlzylindrische Kolbenstange (3) hinein erstreckendes Innenrohr (6) angeordnet. Dabei ist der den Ausgleichsraum (11) von der Gasfederkammer (13) trennende Trennkolben (12) innerhalb des Innenrohres
(6) geführt.

# Hydro-pneumatischer Stoß- und Schwingungsdämpfer mit Innenrohr

Die vorliegende Erfindung betrifft einen hydro-pneumatischen Stoß- und Schwingungsdämpfer, bestehend aus einem Zylinder, einem innerhalb des Zylinders axialbeweglich angeordneten und zwei mit einem hydraulischen Dämpfungsmedium gefüllte, über mindestens eine Drosselung verbundene Arbeitsräume abteilenden Dämpfungskolben, einer mit dem Dämpfungskolben mechanisch verbundenen, abgedichtet aus dem Zylinder nach außen geführten Kolbenstange, einem mit einem der Arbeitsräume verbundenen Ausgleichsraum zur Aufnahme eines von der Kolbenstange verdrängten Volumens des Dämpfungsmediums sowie einer über einen freibeweglichen, schwimmenden Trennkolben dicht von dem Ausgleichsraum getrennten, mit einem kompressiblen Medium gefüllten Gasfederkammer.

Bei einem derartigen, aus der DE-OS 34 27 843 bekannten Dämpfer schließt sich der Ausgleichsraum über eine Passage, in der ein verstellbares Dämpfungsventil angeordnet ist, axial an eine Seite des Zylinders an. Weiterhin schließt sich auch die Gasfederkammer über eine beispielsweise von einer Membran oder einem Trennkolben gebildeten Trennwand in axialer Richtung an diese Anordnung an, was insgesamt zu einer sehr ungünstigen Baulänge dieses bekannten Dämpfers führt. Ferner ist die Kolbenstange an lediglich zwei Punkten geführt, nämlich einerseits über den in dem Zylinder geführten Dämpfungskolben und andererseits im Durchführungsbereich durch den Zylinder, was für bestimmte Anwendungen eine nur unzureichende Stabilität gegenüber seitlich einwirkenden Querkräften gewährleistet.

Ein weiterer hydro-pneumatischer Dämpfer ist aus der DE-OS 30 49 385 bekannt. Bei diesem bekannten Dämpfer ist die Kolbenstange hohlzylindrisch ausgebildet, und der Dämpfungskolben besitzt Drosselöffnungen, so daß das Dämpfungsmedium durch die Drosselöffnungen des Dämpfungskolbens hindurch aus dem Zylinderraum in die hohlzylindrische Kolbenstange gelangen kann. Die hohlzylindrischen Kolbenstange bildet hierdurch gleichzeitig einen Arbeitsraum sowie einen Ausgleichsraum. Innerhalb der hohlen Kolbenstange ist weiterhin ein schwimmender Trennkolben axialverschiebbar gelagert, der die durch die Drosselöffnungen des Dämpferkolbens in die Kolbenstange überströmende Dämpfungsflüssigkeit von der ebenfalls innerhalb der hohlen Kolbenstange gebildeten Gasfederkammer trennt. Während des Druckhubes wird eine dem gesamten Volumen der Kolbenstange entsprechende Menge an Dämpfungsflüssigkeit in die hohlzylindrische Kolbenstange verdrängt. Dies führt nachteiligerweise ebenfalls zu einer ungünstigen Baulänge des Schwingungsdämpfers. Auch dieser bekannte Dämpfer besitzt eine für manche Anwendungsfälle nur unzureichende Querstabili tät, da seine Kolbenstange ebenfalls an lediglich zwei Stellen geführt ist.

Der vorliegenden Erfindung liegt die Aufgabe zugrunde, ausgehend von dem eingangs beschriebenen Stand der Technik, einen kompakten, sehr stabilen Dämpfer mit geringer Baulänge zu schaffen.

Erfindungsgemäß wird dies durch die kennzeichnenden Merkmale des Anspruchs 1 erreicht. Vorteilhafte Weiterbildungen sind in den Unteransprüchen enthalten.

Der erfindungsgemäße Stoß- und Schwingungsdämpfer besitzt eine außerordentlich kompakte Bauform, d.h. eine nur sehr geringe Baulänge, da erfindungsgemäß sowohl der Ausgleichsraum als auch der Trennkolben sowie zumindest ein Teilvolumen der Gasfederkammer innerhalb des koaxial in dem Zylinder angeordneten Innenrohres angeordnet sind. Dabei wird in den Ausgleichsraum lediglich das der Wandstärke der hohlzylindrischen Kolbenstange entsprechende Flüssigkeitsvolumen verdrängt. Dies trägt ebenfalls zu einer sehr kurzen Bauform bei. Die hohlzylindrische Kolbenstange wird erfindungsgemäß großflächig auf dem Innenrohr geführt, d.h. sie gleitet während des Kolbenhubs mit ihrer Innenwandung auf dem Außenumfang des Innenrohrs. Diese erfindungsgemäße Ausgestaltung gewährleistet in jedem Betriebszustand eine hohe Stabilität besonders auch gegenüber seitlich einwirkenden Querkräften, so daß sich der erfindungsgemäße Dämpfer insbesondere als Federbein zur unmittelbaren Führung von Kfz-Rädern eignet. Weitere Vorteile sind in der nachfolgenden Beschreibung erläutert.

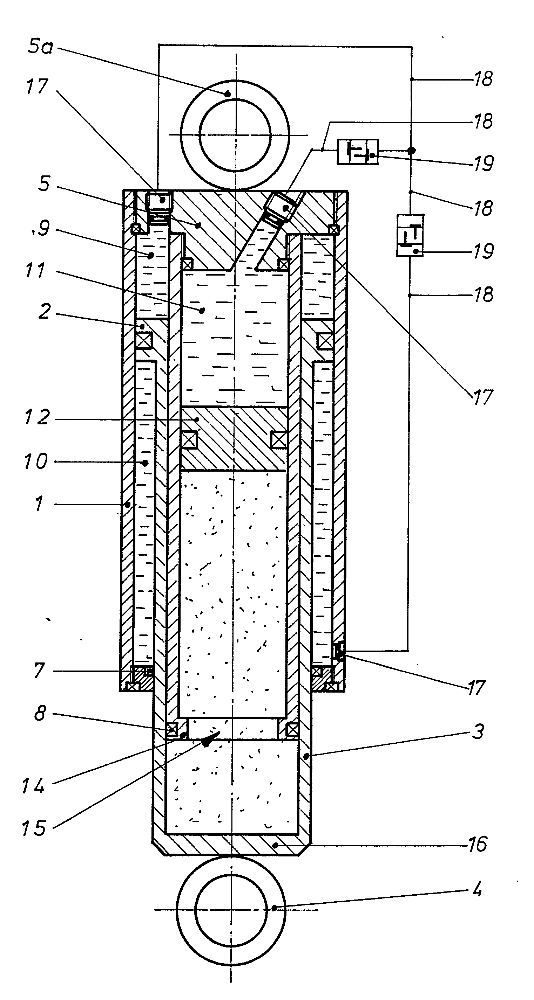

Die Erfindung wird nachfolgend anhand der beiliegenden Zeichnung beispielhaft näher erläutert. Dabei zeigt die einzige Figur eine vorteilhafte Ausführungsform eines erfindungsgemäßen Stoß- und Schwingungsdämpfers im Längsschnitt in schematischer Darstellung.

In der Zeichnung ist beispielhaft ein hydro-pneumatischer Stoß- und Schwingungsdämpfer - im folgenden lediglich Dämpfer genannt - dargestellt, der im wesentlichen aus einem Zylinder 1, einem innerhalb des Zylinders 1 axialbeweglich angeordneten Dämpfungskolben 2 und einer mit diesem verbundenen, abgedichtet aus dem Zylinder 1 nach außen geführten Kolbenstange 3 besteht. An ihrem freien Ende besitzt die Kolbenstange 3 ein Anschlußstück 4, welches mit einer nicht dargestellten, zu dämpfenden Masse, beispielsweise einem Fahrzeugrad, verbindbar ist. Der Zylinder 1 ist mit einem Kopfteil 5 über ein Anschlußstück 5a beispielsweise an einem ebenfalls nicht dargestellten Fahrzeugrahmen zu befestigen.

Die Kolbenstange 3 ist erfindungsgemäß hohlzylindrisch ausgebildet. Innerhalb des Zylinders 1 ist ein an dem Kopfteil 5 befestigtes Innenrohr 6 koaxial angeordnet, welches sich etwa bis zu dem dem Kopfteil 5 gegenüberliegenden Ende des Zylinders 1 oder - wie dargestellt - etwas darüber hinaus sowie in die hohlzylindrische Kolbenstange 3 hinein erstreckt. Hierzu ist der Dämpfungskolben 2 ringförmig ausgebildet, so daß er das Innenrohr 6 in einem zwischen diesem und dem Zylinder 1 gebildeten Zylinder-Ringraum mit geringem Umfangsspiel umschließt. Die hohlzylindrische Kolbenstange 3 ist hierdurch vorteilhafterweise mit ihrer Innenwandung über den gesamten Hub des Dämpfungskolbens 2 an dem Außenmantel des Innenrohrs 6 geführt, wodurch der erfindungsgemäße Dämpfer eine hohe Stabilität erhält. Zur Abdichtung der Kolbenstange 3 sind zwischen dieser und dem Zylinder 1 ein äußerer Dichtring 7 sowie zwischen dem Innenrohr 6 und dem Innenumfang der Kolbenstange 3 ein innerer Dichtring 8 angeordnet.

Der ringförmige Dämpfungskolben 2 unterteilt den Zylinder-Ringraum in einen dem Kopfteil 5 zugekehrten, oberen Arbeitsraum 9 und einen Kopfteil 5 abgekehrten, unteren Arbeitsraum 10. Die beiden Arbeitsräume 9 und 10 sind mit einem hydraulischen Dämpfungsmedium gefüllt. Der obere Arbeitsraum 9 ist mit einem erfindungsgemäß innerhalb des Innenrohres 6 gebildeten Ausgleichsraum 11 verbunden, der zur Aufnahme eines von der Kolbenstange 3 verdrängten Volumens des Dämpfungsmediums dient.

Innerhalb des Innenrohres 6 ist erfindungsgemäß weiterhin als Begrenzung des Ausgleichsraums 11 ein schwimmender Kolben 12 freibeweglich angeordnet, der den Ausgleichsraum 11 von einer ebenfalls zumindest teilweise innerhalb des Innenrohres 6 gebildeten Gasfederkammer 13 dichtend trennt, in der ein elastisch kompressibles Medium, z.B. Luft, angeordnet ist. In der dargestellten Ausführungsform der Erfindung weist einerseits das Innenrohr 6 im Bereich einer dem nach außen geführten Ende der Kolbenstange 3 zugekehrten Bodenwandung 14 eine Durchgangsöffnung 15 auf, während andererseits die hohlzylindrische Kolbenstange 3 im Bereich ihres aus dem Zylinder 1 ragenden Endes gasdicht geschlossen ist, wozu sie z.B. einen gasdicht geschlossenen Boden 16 besitzt. Hierdurch erhält vorteilhafterweise die Gasfederkammer 13 ein großes Volumen, was einen Einfluß auf die pneumatische Federkraft und/oder Federkennlinie des erfindungsgemäßen Dämpfers hat. Es liegt jedoch ebenfalls im Rahmen der Erfindung, das Innenrohr 6 in seinem freien, dem nach außen geführten Ende der Kolbenstange 3 zugekehrten Endbereich gasdicht geschlossen auszubilden, wobei dann die Kolbenstange 3 in ihrem sich axial über das Innenrohr 6 hinaus nach außen erstreckenden Bereich eine Lüftungsöffnung besitzt. Diese - nicht dargestellte - Alternative hat ebenfalls eine Einwirkung auf die Federcharakteristik der von der Gasfederkammer 13 gebildeten, pneumatischen Feder.

Zur hydraulischen Verbindung der beiden Arbeitsräume 9, 10 sowie des oberen Arbeitsraumes 9 mit dem Ausgleichsraum 11 besitzt im dargestellten Ausführungsbeispiel der Erfindung der Zylinder 1 drei Anschlußstücke 17, von denen jeweils eines in den unteren Arbeitsraum 10, den oberen Arbeitsraum 9 und den Ausgleichsraum 11 mündet. Dabei sind die in den oberen Arbeitsraum 9 und den Ausgleichsraum 11 mündenden Anschlußstücke 17 in Kanälen des Kopfteils 5 angeordnet, während das in den unteren Arbeitsraum 10 mündende Anschlußstück 17 in der Wandung des Zylinders 1 sitzt. An die Anschlußstücke 17 sind vereinfacht dargestellte, externe Rohr- oder Schlauchleitungen 18 anschließbar. In der Leitung 18 zwischen den beiden Arbeitsräumen 9 und 10 ist vorzugsweise eine Drosselung mit einem Drossel- oder Dämpfungsventil 19 angeordnet. In die den oberen Arbeitsraum 9 mit dem Ausgleichsraum 11 verbindenden Leitung 18 ist ein vorzugsweise regelbares Dämpfungsventil 19 geschaltet. Darüber hinaus ist mit dem erfindungsgemäßen Dämpfer ohne weiteres auch eine Niveau-Einstellung möglich, indem über eines der Anschlußstücke 17 und die entsprechende Leitung 18 Dämpfungsmedium zugeführt oder abgeführt wird.

In einer nicht dargestellten, alternativen Ausführungsform der Erfindung kann jedoch auch der Dämpfungskolben 2 als Drosselungen axiale Durchgangspassagen besitzen, in denen Drosselventile angeordnet sein können. Ebenso kann auch der obere Arbeitsraum 9 über mindestens eine Passage des Kopfteils 5 des Zylinders 1 und/oder des Innenrohrs 6 mit dem Ausgleichsraum 11 verbunden sein, wobei in diesem Fall vorzugsweise in der Passage am Übergang von dem Arbeitsraum 9 zu dem Ausgleichsraum 11 ein Dämpfungsventil angeordnet ist.

Die Erfindung ist nicht auf das dargestellte und beschriebene Ausführungsbeispiel beschränkt, sondern umfaßt auch alle im Sinne der Erfindung gleichwirkenden Ausführungsformen.

## Ansprüche

1. Hydro-pneumatischer Stoß- und Schwingungsdämpfer, bestehend aus einem Zylinder, einem innerhalb des Zylinders axialbeweglich angeordneten und zwei mit einem hydraulischen Dämpfungsmedium gefüllte, über mindestens eine Drosselung verbundene Arbeitsräume abteilenden Dämpfungskolben, einer mit dem Dämpfungskolben mechanisch verbundenen, abgedichtet aus dem Zylinder nach außen geführten Kolbenstange, einem mit einem der Arbeitsräume verbundenen Ausgleichsraum zur Aufnahme eines von der Kolbenstange verdrängten Volumens des Dämpfungsmediums sowie einer über einen freibeweglichen, schwimmenden Trennkolben dicht von dem Ausgleichsraum getrennten, mit einem kompressiblen Medium gefüllten Gasfederkammer, **dadurch gekennzeichnet,** daß die Kolbenstange (3) hohlzylindrisch sowie der Dämpfungskolben (2) ringförmig ausgebildet sind, und daß innerhalb des Zylinders (1) koaxial zu diesem ein sich mit geringem Umfangsspiel durch den ringförmi gen Dämpfungskolben (2) hindurch und in die hohlzylindrische Kolbenstange (3) hinein erstreckendes Innenrohr (6) angeordnet ist, wobei der den Ausgleichsraum (11) von der Gasfederkammer (13) trennende Trennkolben (12) innerhalb des Innenrohres (6) geführt ist.

2. Stoß- und Schwingungsdämpfer nach Anspruch 1,
**dadurch gekennzeichnet,** daß sich das Innenrohr (6) etwa bis in den Bereich des dem nach außen geführten Ende der Kolbenstange (3) zugekehrten Endes des Zylinders (1) erstreckt.

3. Stoß- und Schwingungsdämpfer nach Anspruch 1 oder 2,
**dadurch gekennzeichnet,** daß die Kolbenstange (3) dadurch abgedichtet aus dem Zylinder nach außen geführt ist, daß zwischen dem Außenumfang der Kolbenstange (3) und dem Zylinder (1) ein äußerer Dichtring (7) sowie zwischen dem Innenumfang der Kolbenstange (3) und dem Außenumfang des Innenrohrs (6) ein innerer Dichtring (8) jeweils unter dichtender Anlage angeordnet sind.

4. Stoß- und Schwingungsdämpfer nach einem oder mehreren der Ansprüche 1 bis 3,
**dadurch gekennzeichnet,** daß das Innenrohr (6) an einem dem nach außen geführten Ende der Kolbenstange (3) gegenüberliegenden Kopfteil (5) des Zylinders (1) befestigt ist, wobei der Ausgleichsraum (11) innerhalb des Innenrohres (6) zwischen dem Kopfteil (5) und dem Trennkolben (12) angeordnet ist.

5. Stoß- und Schwingungsdämpfer nach einem oder mehreren der Ansprüche 1 bis 4,
**dadurch gekennzeichnet,** daß das Innenrohr (6) im Bereich einer dem nach außen geführten Ende der Kolbenstange (3) zugekehrten Bodenwandung (14) mindestens eine Durchgangsöffnung (15) aufweist, wobei das nach außen geführte Ende der Kolbenstange (3) gasdicht geschlossen ist, so daß die Gasfederkammer (13) von dem Trennkolben (12) sowie teilweise von dem Innenrohr (6) und teilweise von dem Ende der Kolbenstange (3) begrenzt ist.

6. Stoß- und Schwingungsdämpfer nach einem oder mehreren der Ansprüche 1 bis 4,
**dadurch gekennzeichnet,** daß das Innenrohr (6) in seinem freien, dem nach außen geführten Ende der Kolbenstange (3) zugekehrten Endbereich gasdicht geschlossen ist, so daß die Gasfederkammer (13) von diesem Endbereich des Innenrohres (6) und dem Trennkolben (12) begrenzt ist, wobei die Kolbenstange (3) in ihrem sich axial über das Innenrohr (6) hinaus nach außen erstreckenden Bereich eine Lüftungsöffnung aufweist.

7. Stoß- und Schwingungsdämpfer nach einem oder mehreren der Ansprüche 1 bis 6,
**dadurch gekennzeichnet,** daß in die Arbeitsräume (9, 10) und den Ausgleichsraum (11) jeweils ein nach außen führendes Anschlußstück (17) zum Anschluß von externen Verbindungsleitungen (18) mündet.

8. Stoß- und Schwingungsdämpfer nach Anspruch 7,
**dadurch gekennzeichnet,** daß in den Verbindungsleitungen (18) die Drosselung(en) und/oder mindestens ein Drossel- und/oder Dämpfungsventil (19) angeordnet ist/sind.

9. Stoß- und Schwingungsdämpfer nach einem oder mehreren der Ansprüche 1 bis 6,
**dadurch gekennzeichnet,** daß die die Arbeitsräume (9, 10) verbindende(n) Drosselung(en) als Öffnung(en) in dem Dämpfungskolben (2) gebildet ist (sind), in der (denen) vorzugsweise (jeweils) ein Drosselventil angeordnet ist.

10. Stoß- und Schwingungsdämpfer nach einem oder mehreren der Ansprüche 1 bis 6 und 9,
**dadurch gekennzeichnet,** daß der eine Arbeitsraum (9) über mindestens eine Passage des Kopfteils (5) des Zylinders (1) und/oder des Innenrohres (6) mit dem Ausgleichsraum (11) verbunden ist, wobei vorzugsweise in der Passage am Übergang von dem Arbeitsraum (9) zu dem Ausgleichsraum (11) ein Dämpfungsventil angeordnet ist.